# EUROPEAN PATENT SPECIFICATION

(11) **EP 3 611 052 B1**
(45) Date of publication and mention of the grant of the patent: **23.09.2020**
(21) Application number: 19190657.7
(22) Date of filing: 08.08.2019
(51) Int. Cl.: B60R 5/00, B60R 7/04

(54) **AN OVERHEAD CONSOLE FOR CABIN OF HEAVY COMMERCIAL VEHICLES**
DACHKONSOLE FÜR DIE KABINE SCHWERER NUTZFAHRZEUGE
CONSOLE DE PLAFOND POUR CABINE DE VÉHICULES COMMERCIAUX LOURDS

(30) Priority: 14.08.2018 TR 201811809
(43) Date of publication of application: 19.02.2020
(73) Proprietor: Ford Otomotiv Sanayi Anonim Sirketi, 34885 Sancaktepe/Istanbul (TR)
(72) Inventor: AGALAR, ILKER, 34885 Sancaktepe/Istanbul (TR); GULTEKIN, RAMAZAN, 34885 Sancaktepe/Istanbul (TR); ATES, FUNDA, 34885 Sancaktepe/Istanbul (TR); SENGUL, SERHAD, 34885 Sancaktepe/Istanbul (TR); UZUN, NURCAN, 34885 Sancaktepe/Istanbul (TR)
(74) Representative: Dericioglu, E. Korhan

(56) References cited:
- US-A1- 2018 029 709

## Description

### Technical Field

This invention is related to an overhead console for cabin heavy commercial vehicles which is located to the ceiling zone in the heavy commercial vehicles and is used as a storage area within the cabin.

### Prior Art

The heavy commercial vehicles are generally used in long-distance transportation. Users of the heavy commercial vehicles which are used in the long-distance transportation can be able to fulfill all of their requirements (eating, drinking, sleeping, dressing etc.) within the cabin. In this case, the users shall keep their food, dress and bed equipment (quilt, pillow etc.) within the vehicle. However there is not very much space for storing said equipment within the cabin. In the present condition, the place under the bed is used as a storage area in the cabins with a bed system. However in the cabins with a bed, in case there is a storage area under the bed system, it is difficult to reach to the stored materials. In similar vehicles used today, storage areas are formed for securing to the surface of the cabin closer to the ceiling within the cabin. Said storage areas can be lockable or in open form. The storage areas with openable and closable lids are controlled by rail systems or trussed systems in the present state of the art. In the rail systems used for the storage areas, when the vehicle is on the way, the condition of opening the cabinet lid can be experienced. In case the rail lid of the storage area is opened when the vehicle is on the way, the materials within the cabinet can fall within the vehicle or it can cause the driver become distracted. For this reason it is noted that controlling the storage areas placed near the ceiling portion within the cabin is not useful.

In the present state of the art, another motion system used in the storage areas is the trussed system. In the trussed systems, in case there is a continuous usage thereof, it is deformed quickly and it increases the maintenance costs. In addition to these, the storage areas used in the present state of the art consist of one section. In case the storage area consists of only one section, it causes the user to save the materials in different categories within the same section. In this case, bed equipment, dresses or foods are required to be carried within the same section. On the other hand the storage areas included within the present state of the art are given with the upper bed as an over bed console. When said over bed console is given together with the upper bed, a height which is not appropriate to the ergonomic conditions is obtained. In this case, an overhead console which has a height that can be reached easily by the user provides keeping the materials based on requirements within separate sections and which operates with a useful open/close system, is required.

Among the most important technical problems encountered in the overhead consoles used in the cabins of the heavy commercial vehicles, the following can be mentioned; difficult assembly of the console, a console without a modular and extendible structure, difficult access to the materials within the console, a console without a section and not being able to use each section independently. A solution is brought to the technical problems by the patent subject to application. A modular console is obtained with the patent subject to application and at the same time console access is facilitated because the console is opened in a direction from upwards to downwards. At the same time together with the patent subject to application, the modules of the console can be connected to each other easily and can be produced with an extendible structure.

In the Japan patent document No JPH07137745 (A) with priority date of 16.11.1993 included within the present state of the art, a sliding drawer design is disclosed. In the sliding drawer system included within said document, the drawer is connected on a main frame (framework). The drawer is opened and closed with a sliding system. Sliding process can be realized through the side sliding profiles. A stopper element can be placed on the rail. Said stopper element enables the drawer as a storage element to stay at a preferred point. Thus the storage area included within said document can be used at preferred intervals. In the document included within the present state of the art, a stopper element is used which prevents vibration and derailing of the lid. In the invention subject to application, storage units with a modular structure which are secured to the side wall in the ceiling section of the vehicle are formed. In the invention subject to application, there are shelf holder main seats fixed to the upper portion. At the same time the lid system of the storage area is operated with a piston in a downward direction. In case the storage area is opened by means of a piston and in a downward direction, easy access can be provided with the invention subject to application.

In the Japan patent document No JP2012121461 (A) with priority date of 08.12.2010 included within the present state of the art, a storage area which is packed to the ceiling of the vehicle is disclosed. In the invention included within said document, an openable lid is placed onto the main structure placed to the ceiling by means of the connection brackets. In the invention included within the present state of the art, the lid which can be opened by means of a hinge from the rear region can be fixed by means of a lock from the front side. The invention included within said document is used in a different technical field. The patent subject to application has a modular structure and can be placed on the ceiling of the vehicle in a singular or plural manner. In the invention subject to application, storage units with a modular structure which are secured to the side wall in the ceiling section of the vehicle are formed. In the invention subject to application there are shelf holder main seats fixed to the upper portion. At the same time the lid system of the storage area is operated with a piston in a downward direction. In case the storage area is opened by means of a piston and in a downward direction, easy access can be provided with the invention subject to application.

In the Chinese utility model document No CN205906221 (U) with priority date of 22.07.2016 included within the present state of the art, a plane cabin shelf system is disclosed. In the invention included within said document, an interim storage volume secured to the interior wall is closed by means of a lid. The lid is fixed by means of a locking system. When the lid is opening, it can be kept in an open position at a fixed point by means of a link mechanism. The invention within the document subject to application has a modular structure and can be placed on the ceiling of the vehicle in a singular or plural manner. In the invention subject to application, storage units with a modular structure which are secured to the side wall in the ceiling section of the vehicle are formed. In the invention subject to application there are shelf holder main seats fixed to the upper portion. At the same time the lid system of the storage area is operated with a piston in a downward direction. In case the storage area is opened by means of a piston and in a downward direction, easy access can be provided with the invention subject to application. In the invention subject to application, even when the storage area which operates in piston structure and with a downward direction motion system piston is used in the preferred highest position, easy access to the materials can be provided due to the movement in downward direction together with the opening of the lid.

US 2018/029709 A1 discloses an overhead console system adapted to be placed at a ceiling portion of a cabin. Every console of the system comprises a lid, a framework and a motion mechanism. The consoles may be opened and closed by means of motion mechanism by performing rotation movement around the point where it is seated to the framework, may remain in a stable manner at a preferred location during opening and closing and may be opened by means of moving in a downward direction from the ceiling at its location within the cabin during its angular motion from its seated point.

The overhead console included within the invention subject to application, is used by means of installing to the ceiling of the cabins of the heavy commercial vehicles. The overhead console has a modular structure and can be divided into different sections. When preferred the overhead console consists of one or a plurality of sections and can be used in combination by means of mounting to each other with the other sections from the side walls. The sections within the console can be determined according to the width of the cabin and a console with a preferred width can be provided by means of connecting required sections to each other. The overhead console included in the invention subject to application can be opened and closed in a downward direction by means of a piston and a hinge connection. Since the overhead console is opened by means of a lid motion system with a downward direction, the console section moves in a downward direction and in this case although the console is placed upwardly, easy access to the storage area is provided. At the same time in the lid system of the overhead console, there is a locking mechanism.

In the current applications, there is no such an overhead console which is mounted on the ceiling in the heavy commercial vehicles, has modular structure, can be divided into sections, provides opportunity for combining and mounting different sections in a preferred manner, and has an open/close system in a downward direction with piston, and provides easy access. For this reason, in the present state of the art, a description in relation to the technical features and technical effects provided by the invention subject to application is not found.

### Aims of the Invention

The aim of this invention is to realize an overhead console for the cabin heavy commercial vehicles which comprises an over bed storage area with optimum ease of use.

Another aim of this invention is to realize an overhead console for cabin heavy commercial vehicles which has a modular structure obtained by combining one or a plurality of sections and provides storing materials of different categories within different sections.

Another aim of this invention is to realize an overhead console for the cabin heavy commercial vehicles which has a lid with piston and can be opened and closed with a motion system having a downward direction, has a storage area which moves in a downward direction together with the lid and thus has an easy access to the materials included within the storage area.

Another aim of this invention is to realize an overhead console for the cabin heavy commercial vehicles which provides adjusting the number of sections in a modular manner according to the preferred vehicle type to be used.

### Brief Description of the Invention

An overhead console for a cabin heavy commercial vehicle defined in the first claim and the other dependent claims thereof for fulfilling the aim of this invention consists of console, console group, upper carrier bracket and corner joint. The overhead console is mounted by means of positioning the console group on the ceiling of the vehicle cabin formed by combining one or a plurality of side surfaces of the console. The console group may be connected to the ceiling of the cabin by means of the upper carrier brackets and may be connected to the corners of the cabin by means of corner connections. The console lid consists of the framework and motion mechanism. In the overhead console, the lid is together with the storage receptacle. The framework closes the edge of the cover which is exposed. The lid is bedded to the bedding part in the framework through the rotation bearing. The lid is opened and closed by means of performing a rotational motion from the point where it is bedded to the framework. During the opening and closing motion of the lid, it remains stable at a preferred location by means of the motion mechanism. In this case, it allows the user easily access to the materials within the receptacle by means of its opening in a downward direction in a vertical axis from the position where it is mounted to the console.

### Detailed Description of the Invention

An overhead console for cabin heavy commercial vehicles realized for fulfilling the aim this invention is shown in the attached figures, these figures are as the following;
**Figure 1****.** is a perspective view of the overhead console.
**Figure 2****.** is a perspective view of the overhead console and the upper carrier bracket.
**Figure 3****.** is a perspective view of a console.
**Figure 4****.** is a perspective view of the console from a different angle.
**Figure 5****.** is an exploded view of the console.
**Figure 6****.** is a perspective view of the lid.
**Figure 7****.** is a perspective view of the lid from a different angle.
**Figure 8****.** is a view of K region of Figure 4.
**Figure 9****.** is a zoomed view of the rotation bearing.
**Figure 10****.** is a perspective view of the motion mechanism.
**Figure 11****.** is a perspective view of the framework.
**Figure 12****.** is a zoomed view of the bedding part.
**Figure 13****.** is a perspective view of the corner joint.
**Figure 14****.** is an enlarged view of the corner joint.
**Figure 15****.** is a perspective view of the console lid in an open condition.

The parts in the figures are enumerated one by one, and the equivalents to these numbers are given in the following:
**1.** Overhead console
**2.** Console
   **2.1.** Lid
      **2.1.1.** Receptacle
         **2.1.1.1.** Front wall
         **2.1.1.2.** Rear wall
         **2.1.1.3.** Side wall
      **2.1.2.** Handle
      **2.1.3.** Pusher connection part
         **2.1.3.1.** Connection hole
      **2.1.4.** Rotation bearing
         **2.1.4.1.** Rotation hole
   **2.2.** Framework
      **2.2.1.** Body
      **2.2.2.** Connection extension **2.2.3.** Pusher gap **2.2.4.** Bedding part
         **2.2.4.1.** Grip handle
         **2.2.4.2.** Grip shaft
         **2.2.4.3.** Sliding slot
      **2.2.5.** Side console holder
      **2.2.6.** Side console bracket
   **2.3.** Motion mechanism
      **2.3.1.** Pusher
      **2.3.2.** Framework connection part
         **2.3.2.1.** Framework holder
      **2.3.3.** Lid connection part
         **2.3.3.1.** Lid bracket
**3.** Console group
**4.** Upper carrier bracket
**5.** Corner joint
   **5.1.** Corner bracket
      **5.1.1.** Console connection hole
      **5.1.2.** Bead seat
   **5.2.** Corner lid
      **5.2.1.** Connection nail
      **5.2.2.** Cabin holder

An overhead console (1) for cabin heavy commercial vehicles which is located to the ceiling zone in the heavy commercial vehicles and is used as a storage area within the cabin, comprises the following elements;
- at least one console (2) which comprises at least one lid (2.1), at least one framework (2.2) and at least one motion mechanism (2.3), provides keeping and storing the materials required by the user within the vehicle cabin,
- at least one lid (2.1) which comprises at least one receptacle (2.1.1) in which the materials required by the user are located for storing within the vehicle,
   - may be opened and closed by means of motion mechanism (2.3) by performing rotation movement around the point where it is seated to the framework (2.2),
   - may remain in a stable manner at a preferred location during opening and closing,
   - may be opened by means of moving in a downward direction from the ceiling at its location within the cabin during its angular motion from its seated point,
- at least one framework (2.2) which comprises at least one side console holder (2.2.5) and at least one side console bracket (2.2.6) on the body (2.2.1), is mounted on the ceiling of the vehicle cabin, preserves the receptacle (2.1.1) by closing the open edge of the lid (2.1) and provides bedding of the lid (2.1) for its motion by means of connecting to the lid (2.1) from preferred one or a plurality of points,
- at least one console group (3), each of which is connected and separated to/from the next console (2) by means of the side console holder (2.2.5) and the side console bracket (2.2.6), is formed by combining one or a plurality of consoles (2),
- at least one upper carrier bracket (4) which provides mounting the console group (3) to the ceiling within the vehicle cabin and carrying thereof,
- at least one corner joint (5) which comprises at least one corner bracket (5.1), is mounted to the side surface of the console (2) to be connected to the cabin corner by means of the corner bracket (5.1), provides connection and handling of the console group (3) between the ceiling and the corner within the vehicle cabin.

The overhead console (1) subject to application is used for storing by protecting various materials in accordance with the requirements of the driver within the cabin of the heavy commercial vehicles. The overhead console (1) provides ease of use within the vehicle cabin, at the same time it allows using the cabin at maximum level by means of being mounted to the upper portion of the cabin. The overhead console (1) provides practical and easily usable storage area. The overhead console (1) may be used by mounting to the ceiling of the vehicle cabin. In one embodiment of the invention, the overhead console (1) may be used with the upper bed.

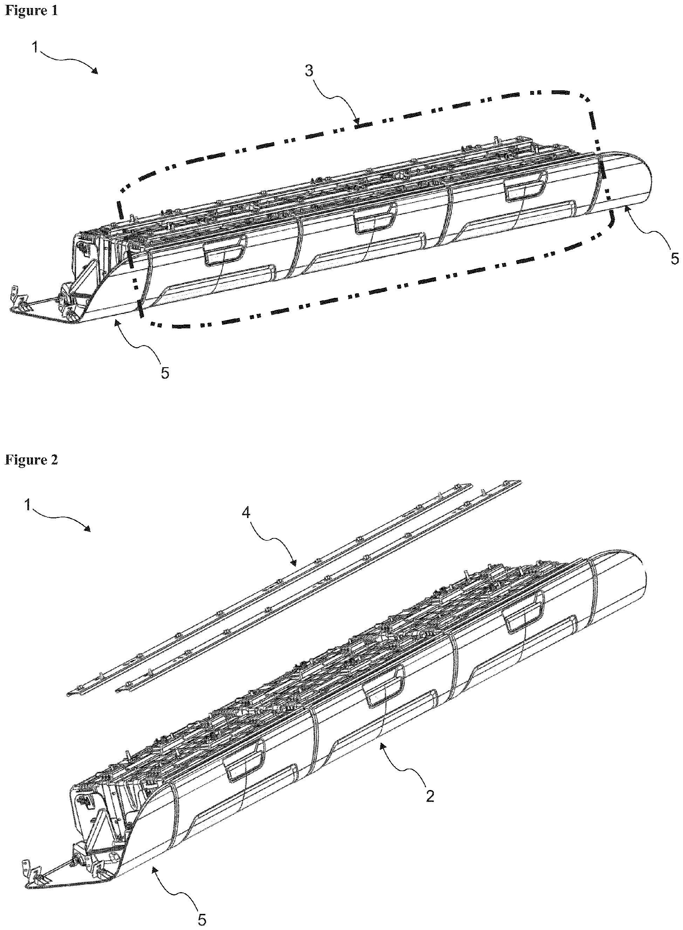

Overhead console (1) comprises console (2), console group (3), upper carrier bracket (4) and corner joint (5). The console (2) provides storing and keeping the required materials of the user within the vehicle cabin. The console group (3) is formed by combining one or a plurality of consoles (2) according to the user preference. In this embodiment of the invention, a console group (3) is formed by combining a plurality of, preferably three consoles (2) (Figure 1). Mounting the console group (3) to the corners of the vehicle cabin is provided by means of the corner joint (5). The console group (3) is mounted to the ceiling of the cabin by means of the upper carrier brackets (4). The upper carrier brackets (4) have preferably a rectangular plate geometrical form. In order to mount the console group (3) to the ceiling of the vehicle, one or a plurality of upper carrier brackets (4) may be used. In this embodiment of the invention, the console group (3) which comprises three consoles (2) is mounted to the ceiling by means of two upper carrier brackets (4) (Figure 2). The upper carrier bracket (4) enables to mount the console group (3) to the ceiling of the vehicle in different manners.

In an embodiment of the invention, the upper carrier brackets (4) are preferably in a longitudinal bar or plate geometrical form and are mounted to the ceiling of the vehicle in a fixed manner. There are gaps, holes which are adapted preferably for providing a plurality of connections on the upper carrier bracket (4). The console group (3) may be secured to the upper carrier bracket (4) by means of fitting connection elements into said gaps. In this case, the console group (3) remains in a stable manner on the upper carrier brackets (4). In case removing or displacing one or a plurality of console (2) from the console group (3) is preferred, said connection elements are removed and the relevant console (2) in the console group (3) may be separated over the upper carrier bracket (4).

In a different embodiment of the invention, the upper carrier brackets (4) are preferably available in a rail form. The rail formed upper carrier brackets (4) are secured to the ceiling of the vehicle in a fixed and stable manner. There are extensions that can make sliding movement within the upper carrier bracket (4) in the rail form, on the surface of the console (2) constituting the console group (3) facing the ceiling of the vehicle. The console group (3) is fitted into the upper carrier bracket (4) with a rail form by means of said extensions on its upper surface. By connecting one or a plurality of console (2) to the upper carrier bracket (4), a console group (3) can be formed. The location and arrangement of the consoles (2) within the formed console group (3) on the upper carrier bracket (4) may be changed according to the preference of the user. At the same time the consoles (2) may move by making sliding motion on the upper carrier bracket (4) with rail form.

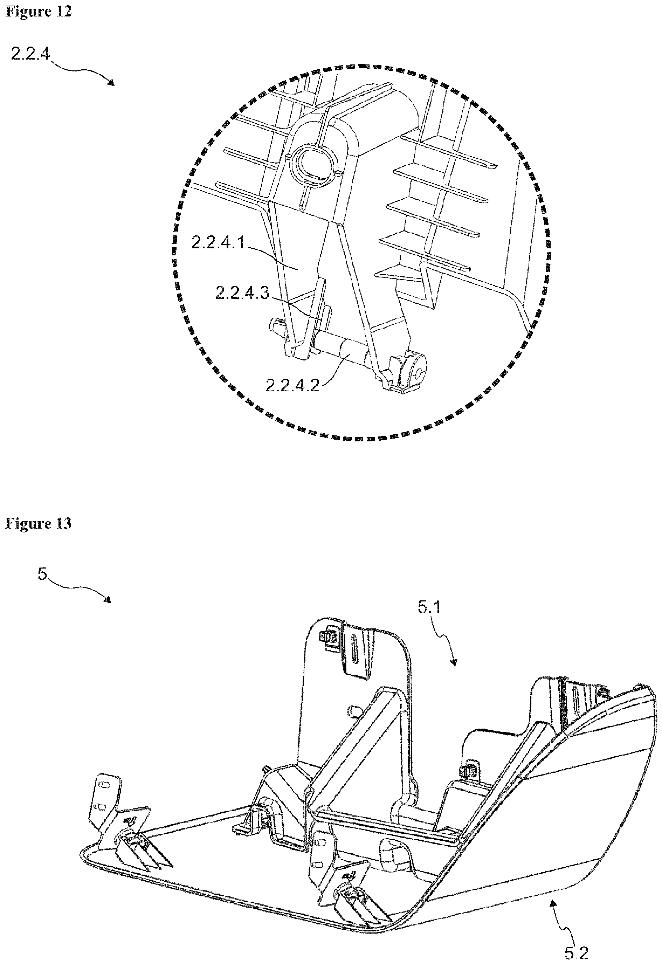

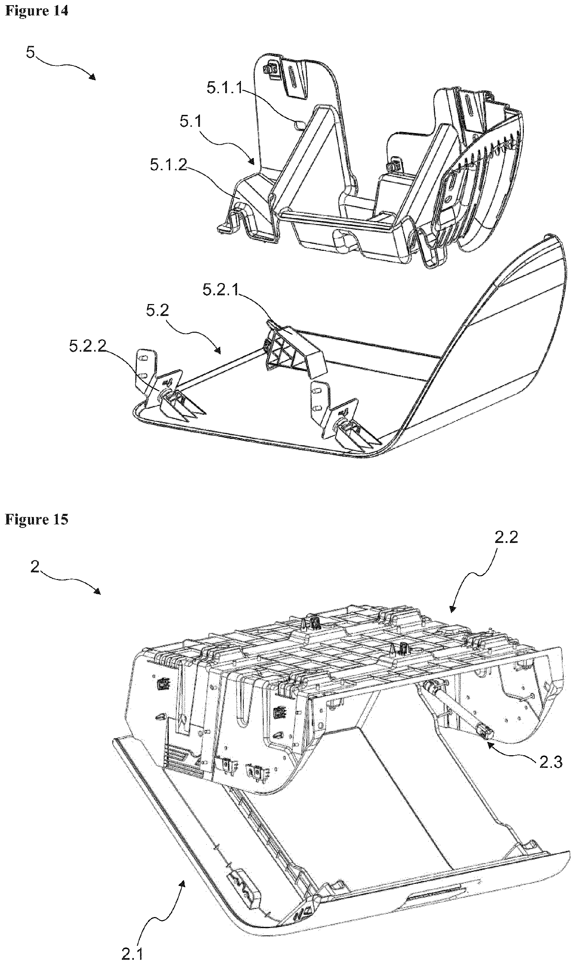

In an embodiment of the invention, the corner joint (5) within the overhead console (1) enables connection and handling of the console group (3) between the ceiling and the corner within the vehicle cabin. The corner joint (5) is mounted to the corner portion of the console group (3) within the cabin (Figures 1-2). The corner joint (5) is mounted to the side surface of the console (2) to be mounted to the corner of the cabin by means of the corner bracket (5.1). The corner joint (5) provides balancing the load of the console group (3) applied on the upper carrier bracket (4). The corner joint (5) is mounted on the side surface of the console (2) which corresponds to the corner of the cabin within the console group (3). The corner joint (5) comprises corner bracket (5.1) and corner lid (5.2) (Figures 13-14). The corner joint (5) may be connected to the console group (3) by means of the corner bracket (5.1). The corner bracket (5.1) provides the connection of the corner joint (5) to the console group (3). The corner bracket (5.1) is preferably in L geometrical form. The corner bracket (5.1) comprises the console connection hole (5.1.1) and the bead seat (5.1.2). The corner bracket (5.1) is attached to the side surface of the console from its longer edge having L geometrical form, it is attached to the corner lid (5.2) from its shorter edge. The console connection hole (5.1.1) is located on the long edge of the corner bracket (5.1). There may be a plurality of console holes on the corner bracket (5.1). The console connection hole (5.1.1) enables the connection of the corner bracket (5.1) to the console (2). The bead seat (5.1.2) enables the connection between the corner bracket (5.1) and the corner lid (5.2). The bead seat (5.1.2) is located at the edge of the corner bracket (5.1) which is perpendicular to the edge where the edge connection hole (5.1.1) is located. The bead seat (5.1.2) is preferably formed as a gap.

In an embodiment of the invention, the corner bracket (5.1) included within the corner joint (5) is placed on the corner lid (5.2) in a manner such that their front faces are in contact with each other face to face. The corner lid (5.2) enables the connection of the corner joint (5) to the cabin. The corner lid (5.2) comprises connection nail (5.2.1) and cabin holder (5.2.2). The corner lid (5.2) is preferably in L geometrical form and its one edge has a similar slope with the lid (2.1) of the console (2). The geometry of the corner lid (5.2) has preferably a similar form with the geometry of the lid (2.1). The geometrical structure of the corner lid (5.2), is adapted to be arranged with the consoles (2) in the same line when the console group (3) is mounted to the cabin. One edge of the corner lid (5.2) having L geometrical form is located in a manner such that it is at the same level with the front wall (2.1.1.1) of the lid (2.1). The connection nail (5.2.1) enables the connection of the corner lid (5.2) to the corner bracket (5.1). The connection nail (5.2.1) is fitted to the bead seat (5.1.2) in the corner bracket (5.1). Together with fitting the connection nail (5.2.1) to the bead seat (5.1.2), the corner bracket (5.1) is secured to the corner lid (5.2). There may be one or a plurality of connection nails (5.2.1) in the corner lid (5.2). The cabin holder (5.2.2) enables to secure the corner lid (5.2) together with the corner bracket (5.1) to the interior wall of the cabin. The cabin holder (5.2.2) is preferably located in the bottom portion of the corner lid (5.2). The cabin holder (5.2.2) enables mounting the corner joint (5) on the edge portion of the cabin.

In an embodiment of the invention, the console (2) included within the overhead console (1) enables to store and to preserve the materials required by the user within the vehicle cabin. The console (2) comprises lid (2.1), framework (2.2) and motion mechanism (2.3). The console (2) may be used individually or in combination with other consoles which are attached to each other from their side surfaces according to the user preference. The lid (2.1) enables to reach the console (2) by means of opening and closing and also storing the preferred material by the user. The framework (2.2) enables to secure the console (2) to the ceiling of the cabin and to preserve the lid (2.1). The motion mechanism (2.3) enables the movement of the lid (2.1) in connection with the framework (2.2) and opening and closing thereof.

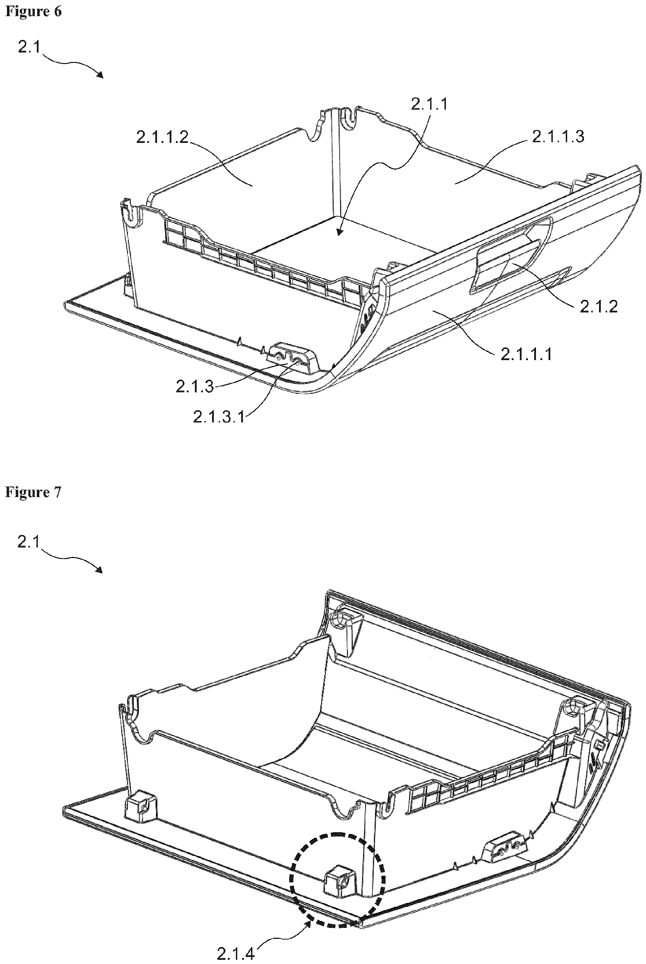

In an embodiment of the invention, the lid (2.1) included in the console (2) comprises at least one receptacle (2.1.1) in which the materials required by the user are stored. The lid (2.1) may be opened and closed by means of the motion mechanism (2.3) by making a rotational motion around the point that it is seated to the framework (2.2). During the lid (2.1) is opened and closed, it may remain in a stable manner at the preferred position. While the lid (2.1) makes an angular rotational motion from the seating point, it is opened by means of moving downwardly from the ceiling starting from its position. The lid (2.1) enables ease of use to the user based on its independent opening manner from the position where the console (2) is mounted within the vehicle. The lid (2.1) remains connected to the framework (2.2). The receptacle (2.1.1) is used as a storage and preserving area on the lid (2.1). The receptacle (2.1.1) consists of the front wall (2.1.1.1), the rear wall (2.1.1.2) and the side walls (2.1.1.3) (Figure 6). The receptacle (2.1.1) is formed by combining the rear wall (2.1.1.2) and the side walls (2.1.1.3) in a perpendicular manner, and the front wall (2.1.1.1) with a preferred angle. The receptacle (2.1.1) is preferably in a rectangular geometrical form, when the front wall (2.1.1.1), the rear wall (2.1.1.2) and the side walls (2.1.1.3) are combined, one edge thereof remains open. When the rear wall (2.1.1.2) and the side walls (2.1.1.3) of the receptacle (2.1.1) are combined, its three sides are surrounded, thus the front wall (2.1.1.1) enables to form a closed area on all four sides. The front wall (2.1.1.1) extends to the rear wall (2.1.1.2) by closing the bottom surface of the receptacle (2.1.1). The front wall (2.1.1.1) is preferably in L geometrical form, its two edges may be combined within a preferred range of angle. In this embodiment of the invention, two edges of the front wall (2.1.1.1) may be formed by giving a circular slope in a wide angle. In this case, the receptacle (2.1.1) constituting the lid (2.1) may be adapted as a geometrical structure according to the installation of the console (2).

In an embodiment of the invention, the lid (2.1) within the console (2) at the same time comprises handle (2.1.2), pusher connection part (2.1.3) and rotation bearing (2.1.4). The front wall of the receptacle (2.1.1) is preferably facing the user. There is a handle (2.1.2) on the front wall (2.1.1.1) of the receptacle (2.1.1). The handle (2.1.2) is preferably located on the upper portion or central portion of the front wall (2.1.1.1). The handle (2.1.2) enables opening the lid (2.1) from its locked position when it is closed. The lid (2.1) is released from its locked position on the framework (2.2) when the handle (2.1.2) is grasped by the user and a force is applied on the handle (2.1.2), thus it is brought to an open position. The pusher connection part (2.1.3) provides the connection of the motion mechanism (2.3) to the lid (2.1). The pusher connection part (2.1.3) is preferably in rectangular geometrical form and is located above the side walls (2.1.1.3) of the receptacle (2.1.1). The pusher connection part (2.1.3) is preferably located to the close portion of the side walls (2.1.1.3) to the front wall (2.1.1.1). The pusher connection part (2.1.3) may be found in an integrated part with the side walls (2.1.1.3) or may be found independent from the side walls (2.1.1.3). There is a connection hole (2.1.3.1) on the pusher connection part (2.1.3). The motion mechanism (2.3) is fixed to the lid (2.1) by fitting to the connection hole (2.1.3.1) on the pusher connection part (2.1.3).

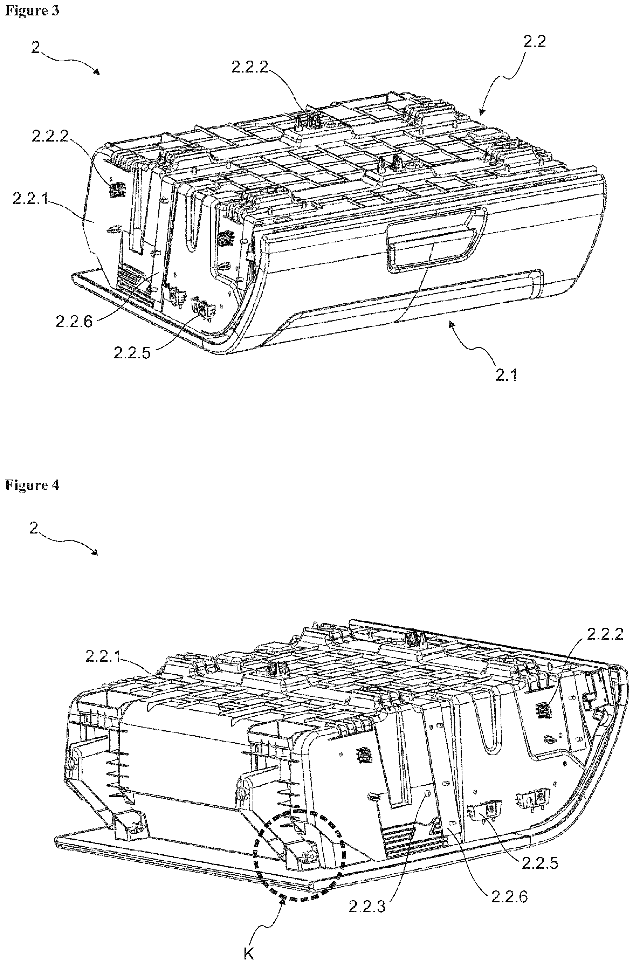

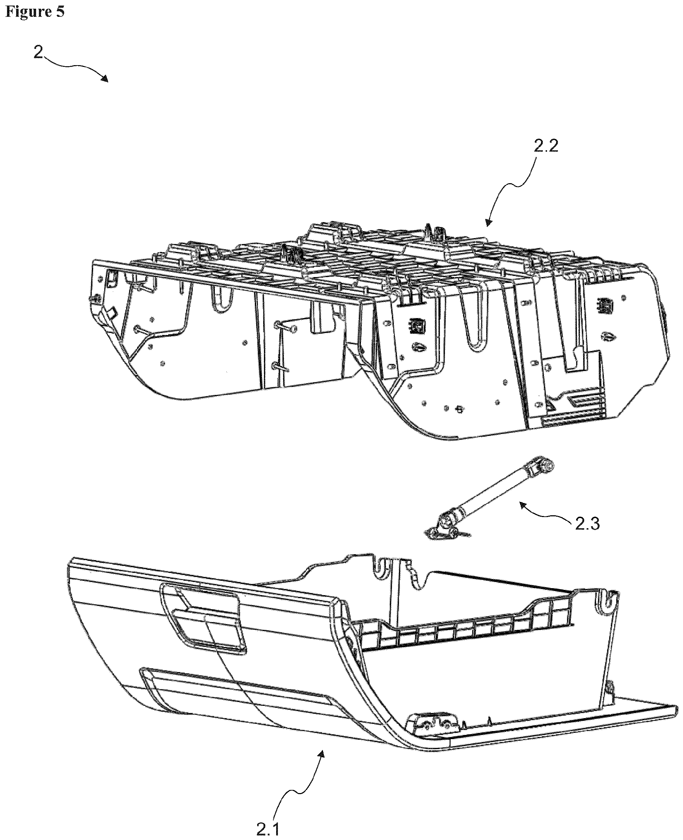

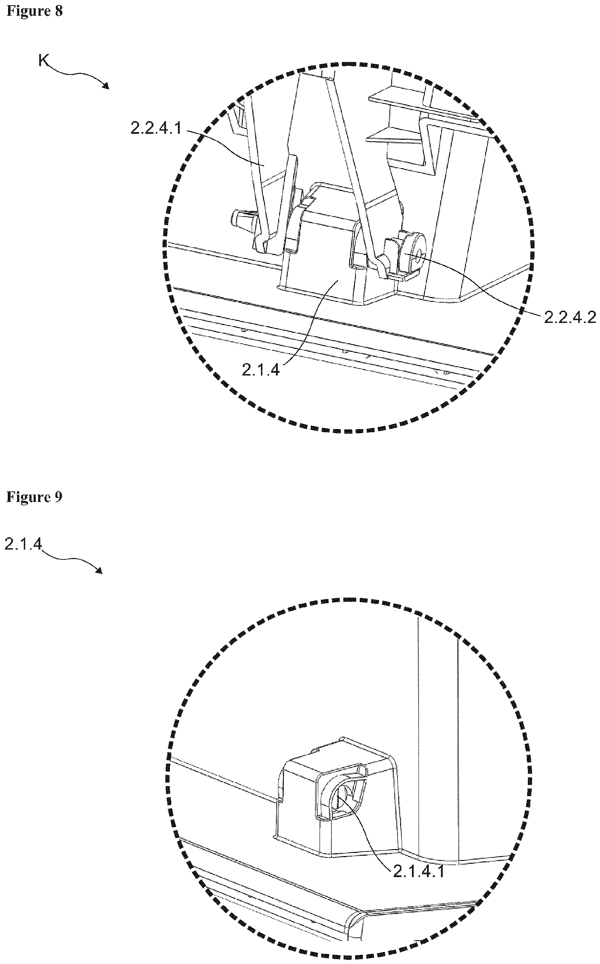

In an embodiment of the invention, in the lid (2.1) which is found on the console (2), there is a rotation bearing (2.1.4). The rotation bearing (2.1.4) provides the connection of the lid (2.1) to the framework (2.2). The lid (2.1) may perform rotational motion based on the framework (2.2) by connecting to the framework (2.2) through the rotation bearing (2.1.4). The lid (2.1) may be seated on the framework (2.2) by means of the rotation bearing (2.1.4) (Figures 4-8). The rotation bearing (2.1.4) is preferably located on the rear wall (2.1.1.2) of the receptacle (2.1.1) (Figure 7). There may be one or a plurality of rotation bearings (2.1.4) in the lid (2.1). In this embodiment of the invention, there are two rotation bearings (2.1.4) on the rear wall (2.1.1.2) of the receptacle (2.1.1). The rotation bearing (2.1.4) is preferably in a tetragonal geometrical form. The rotation bearing (2.1.4) may be an integrated unit with the rear wall (2.1.1.2) of the receptacle (2.1.1) or may be independent from the rear wall (2.1.1.2). In this embodiment of the invention, the rotation bearing (2.1.4) is independent from the rear wall (2.1.1.2) and is mounted to the rear wall (2.1.1.2). There is a rotation hole (2.1.4.1) on the rotation bearing (2.1.4) (Figure 9). The lid (2.1) is bedded to the framework (2.2) through the rotation hole (2.1.4.1). The rotation bearing (2.1.4) enables bedding and connection of the lid (2.1) to the framework (2.2).

In an embodiment of the invention, the framework (2.2) within the console (2) is mounted to the ceiling of the vehicle cabin by means of the upper carrier bracket (4). The framework (2.2) closes the open edge of the lid (2.1) and thus preserves the receptacle (2.1.1). The framework (2.2) at the same time enables bedding of the lid (2.1) for its movement by means of connecting to the lid (2.1) from preferred one or a plurality of points. The framework (2.2) comprises body (2.2.1), connection extension (2.2.2), pusher gap (2.2.3), bedding part (2.2.4), side console holder (2.2.5) and side console bracket (2.2.6). The framework (2.2) preferably consists of a body (2.2.1) having U geometrical form. The connection extension (2.2.2), the pusher gap (2.2.3), the bedding part (2.2.4), the side console holder (2.2.5) and the side console bracket (2.2.6) in the framework (2.2) are located on the body (2.2.1). The body (2.2.1) carries the connection extension (2.2.2), the pusher gap (2.2.3), the bedding part (2.2.4), the side console holder (2.2.5) and the side console bracket (2.2.6) on it. The framework (2.2) connects to the upper carrier bracket (4) from the body (2.2.1) and to the framework (2.2) of the preferred console (2) to be attached next to it. The connection extension (2.2.2) enables to attach the framework (2.2) to the upper carrier bracket (4) and to the framework (2.2) of the consoles which is preferred to be attached next to it. The connection extension (2.2.2) is located on the side and upper surfaces of the body (2.2). There is one or a plurality of connection extensions (2.2.2) on the framework (2.2). The connection extensions (2.2.2) of the framework (2.2) are fitted to the gaps included within the upper carrier bracket (4) and thus its connection to the upper carrier bracket (4) is enabled. At the same time by means of the connection extensions (2.2.2), connection of the framework (2.2) to the framework (2.2) of the console (2) to be attached next to it is enabled.

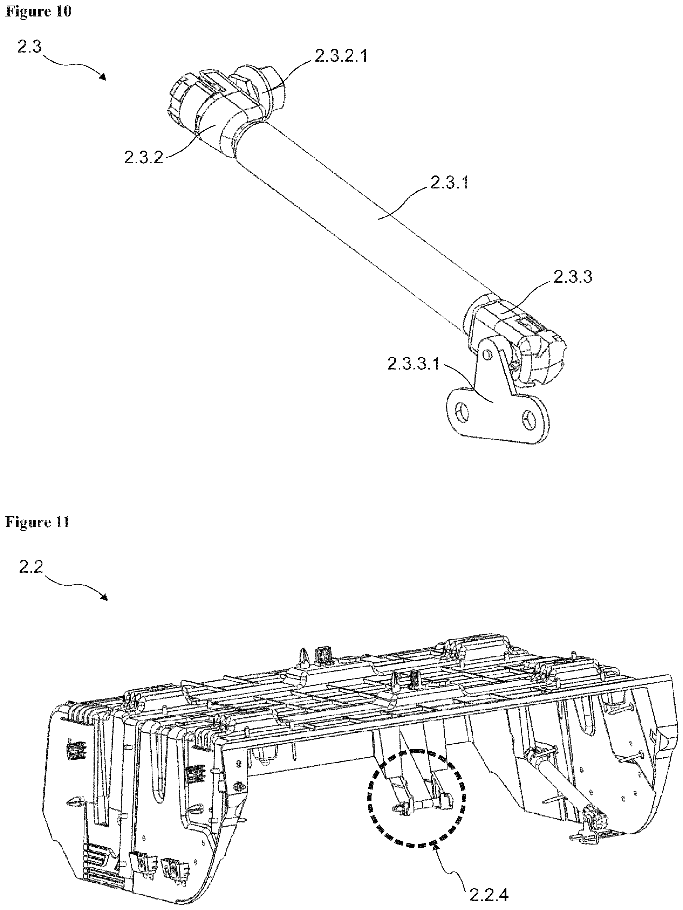

In an embodiment of the invention, the pusher gap (2.2.3) which is located in the framework (2.2) enables the connection between the motion mechanism (2.3) and the framework (2.2). The pusher gap (2.2.3) is preferably on the two extensions of the framework (2.2) (Figure 4). The pusher gap (2.2.3) may be located on a preferred position on the extension of the framework (2.2). By fitting the motion mechanism (2.3) from one end to the pusher gap (2.2.3), it is fixed to the framework (2.2). The bedding part (2.2.4) extends through the upper surface of the framework (2.2) having U geometrical form in a manner such that it combines the two extensions (Figure 11). The bedding part (2.2.4) enables bedding of the lid (2.1) to the framework (2.2). The bedding part (2.2.4) comprises grip handle (2.2.4.1), grip shaft (2.2.4.2) and sliding slot (2.2.4.3) (Figure 12). The bedding part (2.2.4) is connected to the rotation bearing (2.1.4) on the lid (2.1). The lid (2.1) which is connected to the framework (2.2) from the rotation bearing (2.1.4) by means of the bedding part (2.2.4), may make rotational motion around the central axis of the grip shaft (2.2.4.2). The bedding part (2.2.4) is preferably in U geometrical form and consists of grip handles (2.2.4.1) which are located parallel to each other. The grip handles (2.2.4.1) are found in a manner such that they have preferred gaps between each other. The bedding element (2.2.4) may be found independently from the framework (2.2) or in connection with the framework (2.2). In this embodiment of the invention, the bedding element (2.2.4) is an integrated unit with the framework (2.2). There is a gap as wide as the width of the rotation bearing (2.1.4) between the grip handles (2.2.4.1). There is a grip shaft (2.2.4.2) in a manner such that its end sections are combined. The grip shaft (2.2.4.2) is preferably in a cylindrical geometrical form. The grip shaft (2.2.4.2) is passed through the rotation hole (2.1.4.1) in the rotation bearing (2.1.4). The grip shaft (2.2.4.2) may perform rotation movement in the rotation hole (2.1.4.1). In case the lid (2.1) is opened, the grip shaft (2.2.4.2) connected to the rotation bearing (2.1.4) may perform rotational motion within the rotation bearing (2.1.4). The diameter of the grip shaft (2.2.4.2) is smaller than the diameter of the rotation hole (2.1.4.1). The grip shaft (2.2.4.2) may be able to perform a rotational motion within the rotation hole (2.1.4.1) without being subject to any friction. In case the lid (2.1) opens, together with the rotational motion of the grip shaft (2.2.4.2) around the central axis within the rotation hole (2.1.4.1), it extends angularly by moving in a downward direction.

In another embodiment of the invention, in the bedding part (2.2.4) of the framework (2.2), there is a sliding slot (2.2.4.3). While the lid (2.1) performs rotational motion by means of the bedding part (2.2.4) at the same time the sliding slot (2.2.4.3) enables its motion in a downward manner with a perpendicular axis. The sliding slot (2.2.4.3) is located on the surfaces of the grip handles (2.2.4.1) that are facing each other. The length of the sliding slot (2.2.4.3) may be adjusted based on the movement of the lid (2.1) in a preferred extent in the perpendicular direction. The perpendicular movement of the lid (2.1) in relation to the framework (2.2) is realized by the perpendicular movement of the grip shaft (2.2.4.2) within the sliding slot (2.2.4.3) When the lid (2.1) is opened, first of all the grip shaft (2.2.4.2) moves in a perpendicular axis downwardly within the sliding slot (2.2.4.3). Subsequently the grip shaft (2.2.4.2) seats to the rotation hole (2.1.4.1) and makes a rotational motion around the central axis within the rotation hole (2.1.4.1), thus enables the lid (2.1) to extend angularly in a downward manner. In this case, the console (2) enables the user to access the materials within the receptacle (2.1.1) by means of extending and opening from its installed position at a perpendicular axis in a downward direction.

In an embodiment of the invention, there are side console holder (2.2.5) and side console bracket (2.2.6) in the framework (2.2). The side console holder (2.2.5) and the side console bracket (2.2.6) enables to form the console group (3) by means of combining the consoles (2) through their side surfaces. The side console holder (2.2.5) enables the connection of the console (2) with the other console (2) to be placed on its side surface. The side console holder (2.2.5) is located in the side surfaces of the framework (2.2). There may be one or a plurality of side console holder (2.2.5) on the framework (2.2). In this embodiment of the invention, there are four side console holders (2.2.5) on both side surfaces of the framework (2.2). The side console holder (2.2.5) is preferably in rectangular geometrical form and there is a channel or a gap on it with a fitted structure onto each other. When combining side surfaces of the consoles (2) is preferred, connection is enabled by means of fitting the side console holders (2.2.5) over each other. The side console bracket (2.2.6) is preferably in L geometrical form. The side console bracket (2.2.6) has a similar form with the side console holder (2.2.5), it is located on the side surfaces of the framework (2.2). The side console bracket (2.2.6) enables fastening the console (2) on another console (2) to be placed on the side surfaces. The side console bracket (2.2.6) is mounted to the framework (2.2) in a manner such that one extension shall be on the upper surface of the framework (2.2) and other extension shall be on the side surface of the framework (2.2). There is preferably extension on the side console bracket (2.2.6). The consoles (2) are combined side by side with each other by means of first of all connecting the side console holders (2.2.5) by overlapping on each other and subsequently fitting the extensions on the side console bracket (2.2.6) to the side surface of the framework (2.2).

In an embodiment of the invention, the motion mechanism (2.3) included within the console (2) enables opening and closing motion of the lid (2.1). The motion mechanism (2.3) consists of the pusher (2.3.1), the framework connection part (2.3.2) and the lid connection part (2.3.3) (Figure 10). The motion mechanism (2.3) is connected to the framework (2.2) from its one end and connected to the lid (2.1) from its other end. The motion mechanism (2.3) is connected to the lid (2.1) by means of fitting it to the pusher connection part (2.1.3). The motion mechanism (2.3) is connected to the framework (2.2) by means of passing through the pusher gap (2.2.3). The motion mechanism (2.3) is operated by creating a pulling and repelling force based on the pressure applied thereof. A pulling and repelling force is created in the motion mechanism (2.3) based on the pressure applied onto the pusher (2.3.1). The motion mechanism (2.3) enables the lid (2.1) remains in a stable manner at a preferred position while it is opening. On one end of the pusher (2.3.1), there is a framework connection part (2.3.2) and on its other end there is a lid connection part (2.3.3). The motion mechanism (2.3) is secured to the framework (2.2) through the framework connection part (2.3.2) and is secured to the lid (2.1) through the lid connection part (2.3.3). The framework connection part (2.3.2) enables the connection of the motion mechanism (2.3) to the framework (2.2). The framework connection part (2.3.2) comprises framework holder (2.3.2.1). The motion mechanism (2.3) is secured to the framework (2.2) by means of fitting to the framework holder (2.3.2.1) within the framework connection part (2.3.2) and to the pusher gap (2.2.3) in the framework (2.2). The framework holder (2.3.2.1) is preferably similar to a connection element. The framework holder (2.3.2.1) is fitted and secured by rotating through the pusher gap (2.2.3). The lid connection part (2.3.3) enables the connection of the motion mechanism (2.3) on the lid (2.1). The lid connection part (2.3.3) comprises lid bracket (2.3.3.1). The motion mechanism (2.3) is secured to the lid (2.1) by being located on the lid bracket (2.3.2.1) in the lid connection part (2.3.3) and the pusher connection part (2.1.3) on the lid (2.1).

In this embodiment of the invention, the usage of the present overhead console (1) is as the following. The overhead console (1) is formed by means of combining side surfaces of one or a plurality of consoles (2) and is mounted by placing the console group (3) consisting of the combined consoles (2) to the ceiling of the vehicle cabin. The console group (3) may be attached to the ceiling of the cabin by means of the upper carrier brackets (4), and to the cabin corners (side surfaces of the cabin) by means of the corner brackets (5). The console (2) consists of the lid (2.1), the framework (2.2) and the motion mechanism (2.3). The lid (2.1) is together with the storage receptacle (2.1.1). The framework (2.2) closes the gap of the edge of the lid (2.1) which is left open. The lid (2.1) is seated to the bedding part (2.2.4) in the framework (2.2) through the rotation bearing (2.1.4). The lid (2.1) is opened and closed by means of making a rotational motion from the point where it is seated to the framework (2.2). During the opening and closing motion of the lid (2.1), its remaining in a stable manner at a preferred position is provided by the motion mechanism. In this case, the console (2) enables the user to access the materials within the receptacle (2.1.1) by means of extending and opening from its installed position at a perpendicular axis in a downward direction.

## Claims

1. An overhead console for cabin of heavy commercial vehicles (1) which is adapted to be placed to the ceiling portion of the vehicle and 2. to be used as a storage area within the cabin by opening in a downward direction from the ceiling, **comprising**
- at least one console (2) which comprises at least one lid (2.1), at least one framework (2.2) and at least one motion mechanism (2.3), provides keeping and storing the materials required by the user within the vehicle cabin; wherein
- the at least one lid (2.1) comprises at least one receptacle (2.1.1) in which the materials required by the user are located for storing within the vehicle, the at least one lid (2.1):
• may be opened and closed by means of the motion mechanism (2.3) by performing rotation movement around the point where it is seated to the framework (2.2),
• may remain in a stable manner at a preferred location during opening and closing,
• may be opened by means of moving in a downward direction from the ceiling at its location within the cabin during its angular motion from its seated point,
- the at least one framework (2.2) comprises at least one side console holder (2.2.5) and at least one side console bracket (2.2.6) on the body (2.2.1), is adapted to be mounted on the ceiling of the vehicle cabin, preserves the receptacle (2.1.1) by closing the open edge of the lid (2.1) and provides bedding of the lid (2.1) for its motion by means of connecting to the lid (2.1) from preferred one or a plurality of points,
wherein the overhead console further comprises:
- at least one console group (3) formed by combining one or a plurality of the consoles (2), each of which being connected and separated to/from the next console (2) by means of the side console holder (2.2.5) and the side console bracket (2.2.6),
- at least one upper carrier bracket (4) which is adapted to provide mounting the console group (3) to the ceiling within the vehicle cabin and carrying thereof,
- at least one corner joint (5) which comprises at least one corner bracket (5.1), is mounted to the side surface of the console (2) and is adapted to be connected to the cabin corner by means of the corner bracket (5.1), and to provide connection and handling of the console group (3) between the ceiling and the corner within the vehicle cabin.

2. An overhead console for cabin of heavy commercial vehicles (1) according to claim 1 **characterized by** the lid (2.1) which comprises a handle (2.1.2), a pusher connection part (2.1.3) and a rotation bearing (2.1.4), is in connection with the framework (2.2) and opens by moving in a downward manner from the ceiling at its position within the cabin while it performs an angular rotation movement from the point where it is seated, enables to reach the console (2) by means of opening and closing via the motion mechanism (2.3) while performing a rotational motion around the point where it is seated to the framework (2.2) and to store the preferred materials by the user, is brought to the open position by being released from its locked position on the framework (2.2) by applying pressure on the handle (2.1.2) by the user who grasps the handle (2.1.2).

3. An overhead console for cabin of heavy commercial vehicles (1) according to claim 2 **characterized by** the handle (2.1.2) which is formed by combining a front wall (2.1.1.1), a rear wall (2.1.1.2) and a side walls (2.1.1.3) perpendicular to each other, the front wall (2.1.1.1) in an angular manner, is located in the receptacle (2.1.1) which is used as a storage, preserving area on the lid (2.1) and on the front wall (2.1.1.1) of the receptacle (2.1.1), enables the lid (2.1) to be opened when the it is in closed position.

4. An overhead console for cabin of heavy commercial vehicles (1) according to claim 2 **characterized by** the rotation bearing (2.1.4) which comprise a connection hole (2.1.3.1), has a rectangular geometrical form and is located on the side walls (2.1.1.3) of the receptacle (2.1.1), comprises the pusher connection part (2.1.3) and a rotation hole (2.1.4.1) which enable the connection of the motion mechanism (2.3) to the lid (2.1) by means of fitting to the connection hole (2.1.3.1), is located on the rear wall (2.1.1.2) of the receptacle (2.1.1), enables the connection of the lid (2.1) to the framework (2.2) and movement of it in a connected manner.

5. An overhead console for cabin of heavy commercial vehicles (1) according to claim 1 **characterized by** the framework (2.2) which comprises the body (2.2.1), a connection extension (2.2.2), a pusher gap (2.2.3), a bedding part (2.2.4), the side console holder (2.2.5) and the side console bracket (2.2.6), enables securing the console (2) to the ceiling of the cabin and preserving the lid (2.1).

6. An overhead console for cabin of heavy commercial vehicles (1) according to claim 5 **characterized by** the connection extension (2.2.2) which is located on the side and upper surfaces of the body (2.2.1), enables attaching the framework (2.2) to the upper carrier bracket (4) and to the framework (2.2) of the console (2) that is preferred to be attached next to it.

7. An overhead console for cabin of heavy commercial vehicles (1) according to claim 5 **characterized by** the bedding part (2.2.4) which comprises a grip handle (2.2.4.1) and a grip shaft (2.2.4.2), extends over the upper surface of the framework (2.2) in U form in a manner combining its two extensions, connects to the rotation bearing (2.1.4) on the lid (2.1) and enables bedding of the lid (2.1) to the framework (2.2).

8. An overhead console for cabin of heavy commercial vehicles (1) according to claim 7 **characterized by** the lid (2.1) which is connected to the framework (2.2) through the rotation bearing (2.1.4) by means of the bedding part (2.2.4), performing rotational motion around the central axis of the grip shaft (2.2.4.2) in case it is opened.

9. An overhead console for cabin of heavy commercial vehicles (1) according to claim 1 **characterized by** the framework (2.2) which is located on the surfaces of the grip handle (2.2.4.1) facing each other, has a sliding slot (2.2.4.3) at the same time which enables the lid (2.1) to move in a perpendicular manner with a downward direction while it performs rotational motion by means of the bedding part (2.2.4).

10. An overhead console for cabin of heavy commercial vehicles (1) according to claim 9 **characterized by** the lid (2.1) which performs a movement in a perpendicular direction in relation to the framework (2.2) based on the movement of the grip shaft (2.2.4.2) within the sliding slot (2.2.4.3) in a perpendicular direction, moves in a perpendicular axis within particularly the sliding slot (2.2.4.3) of the grip shaft (2.2.4.2) when opened, performs rotational motion around the central axis within the rotation hole (2.1.4.1) by fitting into the rotation hole (2.1.4.1) of the grip shaft (2.2.4.2).

11. An overhead console for cabin of heavy commercial vehicles (1) according to claim 5 **characterized by** the side console holder (2.2.5) and the side console bracket (2.2.6) which enables connection of the console (2) with the other console (2) to be placed on the side surfaces and forming the console group (3) by combining the side surfaces of the consoles (2).

12. An overhead console for cabin of heavy commercial vehicles (1) according to claim 1 **characterized by** the motion mechanism (2.3) which consists of a pusher (2.3.1), a framework connection part (2.3.2) and a lid connection part (2.3.3), is connected to the framework (2.2) from it one end by means of fitting to the pusher gap (2.2.3) and is connected to the lid (2.1) from its other end by means of fitting to the pusher connection part (2.1.3).

13. An overhead console for cabin of heavy commercial vehicles (1) according to claim 1 **characterized by** the upper carrier bracket (4) which has a plate geometrical form and is mounted to the ceiling of the vehicle in a stable manner and enables the console group (3) to remain in a stable manner.

14. An overhead console for cabin of heavy commercial vehicles (1) according to claim 1 **characterized by** the upper carrier bracket (4) which is in rail form, is secured to the ceiling of the vehicle in a stable manner, enables fitting the console group (3) onto it and perform sliding motion thereon.

15. An overhead console for cabin of heavy commercial vehicles (1) according to claim 1 **characterized by** the corner joint (5) which is mounted on the side surface of the console (2) to be connected to the corner of the cabin by means of the corner bracket (5.1), enables balancing the load applied on the upper carrier bracket (4) of the console group (3) and is mounted on the side surface of the console (2) which corresponds to the corner of the cabin in the console group (3).

## Patentansprüche

1. Überkopfkonsole für die Kabine von schweren Nutzfahrzeugen (1), die so angepasst ist, dass sie am Deckenteil des Fahrzeugs angebracht und als Lagerraum innerhalb der Kabine verwendet werden kann, indem sie sich von der Decke nach unten öffnet, **umfassend**
- mindestens eine Konsole (2), die mindestens einen Deckel (2.1), mindestens ein Gerüst (2.2) und mindestens einen Bewegungsmechanismus (2.3) umfasst, die Aufbewahrung und Lagerung der vom Benutzer benötigten Materialien innerhalb der Fahrzeugkabine vorsieht; wobei der mindestens eine Deckel (2.1) mindestens eine Aufnahme (2.1.1) umfasst, in dem sich die vom Benutzer benötigten Materialien zur Lagerung des mindestens einen Deckels (2.1) innerhalb des Fahrzeugs befinden:
• kann mittels des Bewegungsmechanismus (2.3) geöffnet und geschlossen werden, indem eine Drehbewegung um den Punkt ausgeführt wird, an dem sie am Gerüst (2.2) sitzt,
• kann während des Öffnens und Schließens stabil an einer bevorzugten Stelle bleiben,
• kann durch Bewegen in Abwärtsrichtung von der Decke an ihrer Stelle innerhalb der Kabine während ihrer Winkelbewegung von ihrem Sitzpunkt aus geöffnet werden,
- der mindestens ein Gerüst (2.2) mindestens einen Seitenkonsolenhalter (2.2.5) und mindestens eine Seitenkonsolenhalterung (2.2.6) an der Karosserie (2.2.1) umfasst, der angepasst ist, um an der Decke der Fahrzeugkabine montiert zu werden, die Aufnahme (2.1.1) durch Schließen des offenen Randes des Deckels (2.1) bewahrt und die Lagerung des Deckels (2.1) für seine Bewegung durch Verbindung mit dem Deckel (2.1) von einem oder mehreren bevorzugten Punkten vorsieht, wobei die Überkopfkonsole ferner umfasst:
- mindestens eine Konsolengruppe (3), die durch die Kombination einer oder mehrerer der Konsolen (2) gebildet wird, von denen jede mit der nächsten Konsole (2) mittels des Seitenkonsolenhalters (2.2.5) und der Seitenkonsolenhalterung (2.2.6) verbunden und von dieser getrennt ist.
- mindestens eine obere Trägerhalterung (4), die angepasst ist, um die Konsolengruppe (3) an der Decke innerhalb der Fahrzeugkabine zu befestigen und zu tragen,
- mindestens eine Eckverbindung (5), die mindestens eine Eckhalterung (5.1) umfasst, an der Seitenfläche der Konsole (2) montiert ist und angepasst ist, um mittels der Eckhalterung (5.1) mit der Kabinenecke verbunden zu werden und die Verbindung und Handhabung der Konsolengruppe (3) zwischen der Decke und der Ecke innerhalb der Fahrzeugkabine vorzusehen.

2. Überkopfkonsole für die Kabine von schweren Nutzfahrzeugen (1) nach Anspruch 1, **dadurch gekennzeichnet, dass** der Deckel (2.1), der einen Griff (2.1.2), ein Drückerverbindungsteil (2.1.3) und ein Drehlager (2.1.4) umfasst, mit dem Gerüst (2.2) verbunden ist und sich durch eine Abwärtsbewegung von der Decke an ihrer Position innerhalb der Kabine öffnet, während er eine Winkeldrehbewegung von dem Punkt aus ausführt, an dem er sitzt, ermöglicht es, die Konsole (2) durch Öffnen und Schließen über den Bewegungsmechanismus (2.3) zu erreichen, während es eine Drehbewegung um den Punkt ausführt, an dem es auf dem Gerüst (2.2) sitzt, und um die vom Benutzer bevorzugten Materialien zu lagern, wird in die geöffnete Position gebracht, indem es durch Druck auf den Griff (2.1.2) durch den Benutzer, der den Griff (2.1.2) ergreift, aus seiner verriegelten Position auf dem Gerüst (2.2) gelöst wird.

3. Überkopfkonsole für die Kabine von schweren Nutzfahrzeugen (1) nach Anspruch 2, **dadurch gekennzeichnet, dass** den Griff (2.1.2), der durch Kombinieren einer Vorderwand (2.1.1.1), einer Rückwand (2.1.1.2) und einer Seitenwand (2.1.1.3), die senkrecht zueinander stehen, gebildet wird, die Vorderwand (2.1.1.1) in einem Winkel angeordnet ist, sich in der Aufnahme (2.1.1) befindet, die als Aufbewahrungs-, Aufbewahrungsbereich am Deckel (2.1) und auf der Vorderwand (2.1.1.1) der Aufnahme (2.1.1) dient, und es ermöglicht, den Deckel (2.1) zu öffnen, wenn er sich in geschlossener Position befindet.

4. Überkopfkonsole für die Kabine von schweren Nutzfahrzeugen (1) nach Anspruch 2, **dadurch gekennzeichnet, dass** das Drehlager (2.1.4), das ein Verbindungsloch (2.1.3.1) umfasst, eine rechteckige geometrische Form aufweist und an den Seitenwänden (2.1.1.3) der Aufnahme (2.1.1) angeordnet ist, aus dem Drückerverbindungsteil (2.1.3) und einem Drehloch (2.1.4.1) besteht, die die Verbindung des Bewegungsmechanismus (2.3) mit dem Deckel (2.1) durch den Einbau in das Verbindungsloch (2.1.3.1) ermöglicht, an der Rückwand (2.1.1.2) der Aufnahme (2.1.1) angeordnet ist, die Verbindung des Deckels (2.1) mit dem Gerüst (2.2) und dessen Bewegung in verbundener Weise ermöglicht.

5. Überkopfkonsole für die Kabine von schweren Nutzfahrzeugen (1) nach Anspruch 1, **dadurch gekennzeichnet, dass** das Gerüst (2.2), das die Karosserie (2.2.1), eine Verbindungsverlängerung (2.2.2), einen Drückerspalt (2.2.3), ein Bettungsteil (2.2.4), den Seitenkonsolenhalter (2.2.5) und die Seitenkonsolenhalterung (2.2.6) umfasst, die Befestigung der Konsole (2) an der Decke der Kabine und die Erhaltung des Deckels (2.1) ermöglicht.

6. Überkopfkonsole für die Kabine von schweren Nutzfahrzeugen (1) nach Anspruch 5, **dadurch gekennzeichnet, dass** die Verbindungsverlängerung (2.2.2), die sich an der Seitenfläche und Oberseite der Karosserie (2.2.1) befindet, das Anbringen des Gerüsts (2.2) an der oberen Trägerhalterung (4) und am Gerüst (2.2) der Konsole (2) ermöglicht, der bevorzugt daneben angebracht werden soll.

7. Überkopfkonsole für die Kabine von schweren Nutzfahrzeugen (1) nach Anspruch 5, **dadurch gekennzeichnet, dass** das Bettungsteil (2.2.4), das einen Griff (2.2.4.1) und eine Griffwelle (2.2.4.2) umfasst, sich über die Oberseite des Gerüsts (2.2) in U-Form in einer Weise erstreckt, die seine beiden Verlängerungen kombiniert, sich mit dem Drehlager (2.1.4) auf dem Deckel (2.1) verbindet und die Lagerung des Deckels (2.1) am Gerüst (2.2) ermöglicht.

8. Überkopfkonsole für die Kabine von schweren Nutzfahrzeugen (1) nach Anspruch 7, **dadurch gekennzeichnet, dass** der Deckel (2.1), der mit dem Gerüst (2.2) über das Drehlager (2.1.4) mittels des Bettungsteils (2.2.4) verbunden ist, eine Drehbewegung um die Mittelachse der Griffwelle (2.2.4.2) ausführt, falls diese geöffnet wird.

9. Überkopfkonsole für die Kabine von schweren Nutzfahrzeugen (1) nach Anspruch 1, **dadurch gekennzeichnet, dass** das Gerüst (2.2), der sich auf den einander zugewandten Oberflächen des Griffs (2.2.4.1) befindet, einen Gleitschlitz (2.2.4.3) gleichzeitig aufweist, wodurch sich der Deckel (2.1) senkrecht nach unten bewegen kann, während er mittels des Bettungsteils (2.2.4) eine Drehbewegung ausführt.

10. Überkopfkonsole für die Kabine von schweren Nutzfahrzeugen (1) nach Anspruch 9, **dadurch gekennzeichnet, dass** der Deckel (2.1), der eine Bewegung in senkrechter Richtung in Bezug auf das Gerüst (2.2) auf der Grundlage der Bewegung der Griffwelle (2.2.4.2) innerhalb des Gleitschlitzes (2.2.4.3) in einer senkrechter Richtung ausführt, sich in einer senkrechten Achse innerhalb insbesondere des Gleitschlitzes (2.2.4.3) der Griffwelle (2.2.4.2) bewegt, wenn er geöffnet wird, eine Drehbewegung um die Mittelachse innerhalb des Drehlochs (2.1.4.1) durch den Einbau in das Drehloch (2.1.4.1) der Griffwelle (2.2.4.2) ausführt.

11. Überkopfkonsole für die Kabine von schweren Nutzfahrzeugen (1) nach Anspruch 5, **dadurch gekennzeichnet, dass** der Seitenkonsolenhalter (2.2.5) und die Seitenkonsolenhalterung (2.2.6), die die Verbindung der Konsole (2) mit der anderen Konsole ermöglicht, (2) auf die Seitenflächen aufzubringen und die Konsolengruppe (3) durch Kombinieren der Seitenflächen der Konsolen (2) zu bilden.

12. Überkopfkonsole für die Kabine von schweren Nutzfahrzeugen (1) nach Anspruch 1, **dadurch gekennzeichnet, dass** der Bewegungsmechanismus (2.3), der aus einem Drücker (2.3.1), einem Gerüstverbindungsteil (2.3.2) und einem Deckelverbindungsteil (2.3.3) besteht, von einem Ende mit dem Gerüst (2.2) durch den Einbau am Drückerspalt (2.2.3) und von seinem anderen Ende mit dem Deckel (2.1) durch den Einbau am Drückerverbindungsteil (2.1.3) verbunden ist.

13. Überkopfkonsole für die Kabine von schweren Nutzfahrzeugen (1) nach Anspruch 1, **dadurch gekennzeichnet, dass** die obere Trägerhalterung (4), die eine plattenförmige geometrische Form aufweist und stabil an der Decke des Fahrzeugs montiert ist und die Konsolengruppe (3) ermöglicht, stabil zu bleiben.

14. Überkopfkonsole für die Kabine von schweren Nutzfahrzeugen (1) nach Anspruch 1, **dadurch gekennzeichnet, dass** die obere schienenförmige Trägerhalterung (4), die stabil an der Fahrzeugdecke befestigt ist, ermöglicht, die Konsolengruppe (3) darauf zu befüllen und darauf eine Gleitbewegung auszuführen.

15. Überkopfkonsole für die Kabine von schweren Nutzfahrzeugen (1) nach Anspruch 1, **dadurch gekennzeichnet, dass** die Eckverbindung (5), die an der Seitenfläche der Konsole (2), die mit der Ecke der Kabine mittels der Eckhalterung (5.1) zu verbinden ist, montiert ist, einen Ausgleich der auf die obere Trägerhalterung (4) der Konsolengruppe (3) aufgebrachten Last ermöglicht und an der Seitenfläche der Konsole (2) montiert ist, die der Ecke der Kabine in der Konsolengruppe (3) entspricht.

## Revendications

1. Console supérieure pour la cabine des véhicules utilitaires lourds (1) qui est adapté pour être placé sur la partie du plafond du véhicule et pour être utilisé comme zone de stockage dans la cabine en s'ouvrant vers le bas à partir du plafond, **comprenant**
- au moins une console (2) qui comprend au moins un couvercle (2.1), au moins un cadre (2.2) et au moins un mécanisme de mouvement (2.3), assure la conservation et le stockage du matériel requis par l'utilisateur dans l'habitacle du véhicule ; dans lequel le au moins un couvercle (2.1) comprend au moins un réceptacle (2.1.1) dans lequel se trouvent les matériaux requis par l'utilisateur pour stocker à l'intérieur du véhicule le au moins un couvercle (2.1) :
• peut être ouvert et fermé au moyen du mécanisme de mouvement (2.3) en effectuant un mouvement de rotation autour du point où il est assis sur le cadre (2.2),
• peut rester de manière stable à un emplacement préféré pendant l'ouverture et la fermeture,
• peut être ouverte en se déplaçant vers le bas à partir du plafond à son emplacement dans la cabine pendant son mouvement angulaire à partir de son point d'assise,
- le au moins un cadre (2.2) comprend au moins un support de console latérale (2.2.5) et au moins un support de console latérale (2.2.6) sur le corps (2.2.1), est adapté pour être monté sur le plafond de la cabine du véhicule, préserve le réceptacle (2.1.1) en fermant le bord ouvert du couvercle (2.1) et assure la stratification du couvercle (2.1) pour son mouvement en le connectant au couvercle (2.1) à partir d'un ou de plusieurs points préférés, la console aérienne comprenant en outre:
- au moins un groupe de consoles (3) formé par la combinaison d'une ou plusieurs des consoles (2), chacune étant connectée et séparée à/de la console suivante (2) au moyen du support de console latérale (2.2.5) et du support de console latérale (2.2.6),
- au moins un étrier de porteur supérieur (4) qui est adapté pour permettre le montage du groupe de consoles (3) au plafond dans la cabine du véhicule et son transport,
- au moins un joint d'angle (5) qui comprend au moins un étrier d'angle (5.1) est monté sur la surface latérale de la console (2) et est adapté pour être connecté au coin de la cabine au moyen de l'étrier d'angle (5.1), et pour assurer la connexion et la manipulation du groupe de consoles (3) entre le plafond et le coin à l'intérieur de la cabine du véhicule.

2. Console supérieure pour la cabine des véhicules utilitaires lourds (1) selon la revendication 1 **caractérisée en ce que** le couvercle (2.1) qui comprend une poignée (2.1.2), une partie de connexion de poussoir (2.1.3) et un palier de rotation (2.1.4), est en connexion avec le cadre (2.2) et s'ouvre en se déplaçant vers le bas depuis le plafond, à sa position dans la cabine, tout en effectuant un mouvement de rotation angulaire depuis le point où il est assis, permet d'atteindre la console (2) par ouverture et fermeture via le mécanisme de mouvement (2.3) tout en effectuant un mouvement de rotation autour du point où il est assis sur le cadre (2.2) et pour stocker les matériaux préférés par l'utilisateur, est amené en position ouverte en étant libéré de sa position verrouillée sur le cadre (2.2) par l'application d'une pression sur la poignée (2.1.2) par l'utilisateur qui saisit la poignée (2.1.2).

3. Console supérieure pour la cabine des véhicules utilitaires lourds (1) selon la revendication 2 **caractérisée en ce que** la poignée (2.1.2) qui est formée par la combinaison d'une paroi avant (2.1.1.1), d'une paroi arrière (2.1.1.2) et de parois latérales (2.1.1.3) perpendiculaires entre elles, la paroi avant (2.1.1.1) de manière angulaire, est située dans le réceptacle (2.1.1) qui sert de zone de stockage, de conservation sur le couvercle (2.1) et sur la paroi avant (2.1.1.1) du réceptacle (2.1.1), permet d'ouvrir le couvercle (2.1) lorsqu'il est en position fermée.

4. Console supérieure pour la cabine des véhicules utilitaires lourds (1) selon la revendication 2 **caractérisée en ce que** le palier de rotation (2.1.4) qui comprend un trou de connexion (2.1.3.1), a une forme géométrique rectangulaire et est situé sur les parois latérales (2.1.1.3) du réceptacle (2.1.1), comprend la partie de connexion du poussoir (2.1.3) et un trou de rotation (2.1.4.1) qui permettent la connexion du mécanisme de mouvement (2.3) au couvercle (2.1) au moyen d'un montage sur le trou de connexion (2.1.3.1), est situé sur la paroi arrière (2.1.1.2) du réceptacle (2.1.1), permet de connecter le couvercle (2.1) au cadre (2.2) et de le déplacer de manière connectée.

5. Console supérieure pour la cabine des véhicules utilitaires lourds (1) selon la revendication 1 **caractérisée en ce que** le cadre (2.2) qui comprend le corps (2.2.1), une extension de connexion (2.2.2), un espace de poussoir (2.2.3), une partie de stratification (2.2.4), le support de console latérale (2.2.5) et le support de console latérale (2.2.6), permet de fixer la console (2) au plafond de la cabine et de préserver le couvercle (2.1).

6. Console supérieure pour la cabine des véhicules utilitaires lourds (1) selon la revendication 5 **caractérisée en ce que** l'extension de connexion (2.2.2) qui est située sur les faces latérales et supérieures du corps (2.2.1), permet de fixer le cadre (2.2) à l'étrier de porteur supérieur (4) et au cadre (2.2) de la console (2) qu'il est préférable de fixer à côté de celui-ci.

7. Console supérieure pour la cabine des véhicules utilitaires lourds (1) selon la revendication 5 **caractérisée en ce que** la partie de stratification (2.2.4) qui comprend une poignée de préhension (2.2.4.1) et une tige de préhension (2.2.4.2), s'étend sur la surface supérieure du cadre (2.2) en forme de U de manière à combiner ses deux extensions, se connecte au palier de rotation (2.1.4) sur le couvercle (2.1) et permet de fixer le couvercle (2.1) au cadre (2.2).

8. Console supérieure pour la cabine des véhicules utilitaires lourds (1) selon la revendication 7 **caractérisée en ce que** le couvercle (2.1) qui est connecté au cadre (2.2) par l'intermédiaire du palier de rotation (2.1.4) au moyen de la partie de stratification (2.2.4), effectuant un mouvement de rotation autour de l'axe central de la tige de préhension (2.2.4.2) en cas d'ouverture.

9. Console supérieure pour la cabine des véhicules utilitaires lourds (1) selon la revendication 1 **caractérisée en ce que** le cadre (2.2) qui se trouve sur les surfaces de la poignée de préhension (2.2.4.1) en face l'une de l'autre, présente en même temps une fente coulissante (2.2.4.3) qui permet au couvercle (2.1) de se déplacer perpendiculairement vers le bas tout en effectuant un mouvement de rotation au moyen de la partie de stratification (2.2.4).

10. Console supérieure pour la cabine des véhicules utilitaires lourds (1) selon la revendication 9 **caractérisée en ce que** le couvercle (2.1) qui effectue un mouvement dans une direction perpendiculaire par rapport au cadre (2.2) basé sur le mouvement de la tige de préhension (2.2.4.2) dans la fente coulissante (2.2.4.3) dans une direction perpendiculaire, se déplace selon un axe perpendiculaire à l'intérieur notamment de la fente coulissante (2.2.4.3) de la tige de préhension (2.2.4.2) lorsqu'elle est ouverte, effectue un mouvement de rotation autour de l'axe central dans le trou de rotation (2.1.4.1) en s'insérant dans le trou de rotation (2.1.4.1) de la tige de préhension (2.2.4.2).

11. Console supérieure pour la cabine des véhicules utilitaires lourds (1) selon la revendication 5 **caractérisée en ce que** le support de console latérale (2.2.5) et le support de console latérale (2.2.6) qui permet de connecter la console (2) avec l'autre console (2) à placer sur les surfaces latérales et de former le groupe de consoles (3) en combinant les surfaces latérales des consoles (2).

12. Console supérieure pour la cabine des véhicules utilitaires lourds (1) selon la revendication 1 **caractérisée en ce que** le mécanisme de mouvement (2.3) qui se compose d'un poussoir (2.3.1), d'une pièce de connexion du cadre (2.3.2) et d'une pièce de connexion du couvercle (2.3.3), est connecté au cadre (2.2) par une de ses extrémités au moyen d'un ajustement à l'espace de poussoir (2.2.3) et est connecté au couvercle (2.1) par son autre extrémité au moyen d'un raccord à la pièce de connexion du poussoir (2.1.3).

13. Console supérieure pour la cabine des véhicules utilitaires lourds (1) selon la revendication 1 **caractérisée en ce que** l'étrier de porteur supérieur (4) qui a une forme géométrique de plaque et qui est monté au plafond du véhicule de manière stable et permet au groupe de consoles (3) de rester stable.

14. Console supérieure pour la cabine des véhicules utilitaires lourds (1) selon la revendication 1 **caractérisée en ce que** l'étrier de porteur supérieur (4) qui est en forme de rail, fixé au plafond du véhicule de manière stable, permet de remplir le groupe de consoles (3) et d'effectuer un mouvement de glissement sur celui-ci.

15. Console supérieure pour la cabine des véhicules utilitaires lourds (1) selon la revendication 1 **caractérisée en ce que** le joint d'angle (5) qui est monté sur la surface latérale de la console (2) pour être connecté à l'angle de la cabine au moyen de l'étrier d'angle (5.1), permet d'équilibrer la charge appliquée sur l'étrier de porteur supérieur (4) du groupe de consoles (3) et est monté sur la surface latérale de la console (2) qui correspond à l'angle de la cabine dans le groupe de consoles (3).
